# EUROPEAN PATENT APPLICATION

(11) **EP 3 799 989 A1**
(43) Date of publication of application: **07.04.2021**
(21) Application number: 20185609.3
(22) Date of filing: 14.07.2020
(51) Int. Cl.: B23K 9/10, B23K 9/32, B23K 37/00

(54) **ENGINE DRIVEN WELDERS**

(30) Priority: 15.07.2019 US 201916511525
(71) Applicant: Lincoln Global, Inc., Santa Fe Springs, CA 90670 (US)
(72) Inventor: ENYEDY, Edward A., Eastlake, OH 44095 (US); MAKOSKY, Justin M., Hiram, OH 44234 (US); HRUSKA, Adam M., Chardon, OH 44024 (US)
(74) Representative: Grosse Schumacher Knauer von Hirschhausen

(57) **Abstract**

A welding machine includes a welding power supply, a chassis structure that forms an engine compartment, and an internal combustion engine (28) located within the engine compartment. A generator is connected to the power supply to supply electrical energy thereto. The generator comprises a rotor shaft driven by the engine (28). The machine includes an air compressor, or hydraulic pump (37), having a driven pulley (43). An axial generator cooling fan (33) is driven by the rotor shaft. The fan (33) has fan blades (92) extending between a central hub (90) attached to the rotor shaft and an annular pulley ring (45) connecting the fan blades (92). The pulley ring (45) is coupled to the driven pulley (43) to power the air compressor or the hydraulic pump (37). A fuel tank (44) is mounted within the chassis structure beneath the engine and generator. The fan (33) generates a first cooling air flow cooling the generator, and a second cooling air flow cooling the fuel tank (44).

## Description

### FIELD OF THE INVENTION

The invention is related to a welding machine according to claims 1 and 5 and to an electrical power generation apparatus according to claim 10. The present disclosure relates to engine driven generators, and in particular to engine driven arc generation devices, such as welders and plasma cutters.

### Description of Related Art

### TECHNICAL BACKGROUND

Engine driven welders include an internal combustion engine, such as a diesel, gasoline or liquefied petroleum gas (LPG) engine. The engine drives a generator, and the generator supplies electrical power to a welding power supply that outputs a welding current and voltage. A compact design for an engine driven welder is often desirable. However, it can be difficult to maximize the machine's fuel storage capacity when a compact design is employed. For example, space for the fuel tank will be limited, and various obstructions in the structural chassis that occupy potential fuel tank space may be present. A compact design for an engine driven welder that maximizes fuel storage capacity would be beneficial. The generator is cooled by a fan that rotates with the generator's rotor to move air through the generator. Air that exits the generator can be quite hot and can undesirably heat nearby components within the engine driven welder. Reducing such heating would be beneficial. Engine driven welders can include auxiliary loads or equipment that are powered by the engine. Examples of such auxiliary loads include air compressors and hydraulic pumps. A drive mechanism is required to power the auxiliary loads.

### DESCRIPTION

In order to improve engine driven welders a welding machine according to claims 1 and 5 is described and an electrical power generation apparatus according to claim 10. Preferred embodiments are subject of the subclaims. The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided is a welding machine. The welding machine includes a welding power supply, and a chassis structure that at least partially forms an engine compartment. An internal combustion engine is located within the engine compartment. A generator is operatively connected to the welding power supply to supply electrical energy to the welding power supply. The generator comprises a rotor shaft driven by the internal combustion engine. The welding machine includes an air compressor or a hydraulic pump comprising a driven pulley. An axial generator cooling fan is driven by the rotor shaft of the generator. The axial generator cooling fan comprises a plurality of fan blades extending between a central hub that is attached to the rotor shaft and an annular pulley ring connecting the fan blades. The annular pulley ring is coupled to the driven pulley to power the air compressor or the hydraulic pump. A fuel tank is mounted within the chassis structure and is located beneath both of the internal combustion engine and the generator. The axial generator cooling fan generates a first cooling air flow that cools the generator, and a second cooling air flow that cools the fuel tank.

In accordance with another aspect of the present invention, provided is a welding machine. The welding machine includes a welding power supply, and a chassis structure comprising a divider wall that at least partially defines an engine compartment of the welding machine. A generator is operatively connected to the welding power supply to supply electrical energy to the welding power supply. The generator comprises a rotor shaft. An internal combustion engine is connected to drive the rotor shaft of the generator. An axial generator cooling fan is driven by the rotor shaft of the generator. The axial generator cooling fan comprises a plurality of fan blades extending between a central hub attached to the rotor shaft and an annular pulley ring connecting the fan blades. An auxiliary load comprising a driven pulley is coupled to the annular pulley ring of the axial generator cooling fan. The axial generator cooling fan powers the auxiliary load via the annular pulley ring. A cantilevered engine-mounting shelf that is cantilevered from the divider wall. The internal combustion engine is attached to the cantilevered engine-mounting shelf. A fuel tank is mounted within the chassis structure and is located beneath both of the cantilevered engine-mounting shelf and the internal combustion engine.

In accordance with another aspect of the present invention, provided is an electrical power generation apparatus comprising an internal combustion engine. An electric generator is coaxially coupled to the internal combustion engine. The electric generator comprises a rotor shaft driven by the internal combustion engine. An axial generator cooling fan is driven by the rotor shaft of the electric generator. The axial generator cooling fan comprises a plurality of fan blades extending from a central hub that is attached to the rotor shaft, and an annular pulley ring encircling the fan blades. An auxiliary load comprising a driven pulley is coupled to the annular pulley ring of the axial generator cooling fan. The axial generator cooling fan powers the auxiliary load via the annular pulley ring. A chassis structure comprising a bulkhead separates an engine compartment from another compartment of the electrical power generation apparatus. A vibration isolator is mounted to the bulkhead, and an engine-mounting shelf is cantilevered from the bulkhead and is isolated from the bulkhead by the vibration isolator. A fuel tank is mounted within the chassis structure and is located beneath each of the engine-mounting shelf, the internal combustion engine and the electric generator.

### BRIEF DESCRIPTION OF THE DRAWINGS

FIG. 1 is a perspective view of an engine driven welder;
FIG. 2 is a perspective view of the engine driven welder;
FIG. 3 is a block diagram of an engine driven welder having an auxiliary device;
FIG. 4 is an internal view of the engine driven welder;
FIG. 5 is an internal view of the engine driven welder;
FIG. 6 is an internal view of the engine driven welder;
FIG. 7 is an internal view of the engine driven welder;
FIG. 8 shows an engine-mounting shelf of the engine driven welder;
FIG. 9 shows the engine-mounting shelf of the engine driven welder;
FIG. 10 is a rear perspective view of the engine driven welder;
FIG. 11 is a rear perspective view of the engine driven welder;
FIG. 12 is an internal view of an engine driven welder having an axial fan;
FIG. 13 is an internal view of the engine driven welder having the axial fan and an auxiliary device; and
FIG. 14 shows a radial fan.

### DETAILED DESCRIPTION

Embodiments of the present disclosure relate to engine driven welders. The embodiments will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

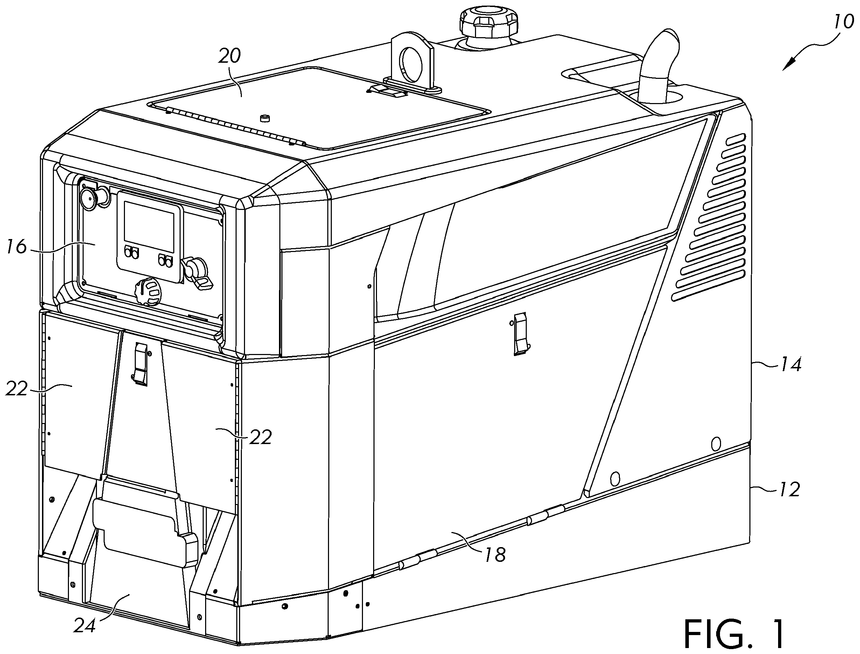

Figure 1 is an outer perspective view of an example engine driven electrical power generation apparatus. The electrical power generation apparatus will be described in the context of a welding machine 10. However, it will be appreciated that aspects of the present disclosure are not limited to welding machines and would be applicable to other types of electrical power generation devices, such as standby generators, engine driven plasma cutters, and the like.

The welding machine 10 includes a base 12 that is part of a chassis structure for the welding machine, and an outer case or enclosure 14. A user interface 16 for controlling the operation of the welding machine 10 is located on the front side of the outer case 14. Example welding processes that can be performed by the welding machine include shielded metal arc welding (SMAW), gas metal arc welding (GMAW), flux-cored arc welding (FCAW), gas tungsten arc welding (GTAW), and gouging.

The case 14 includes various access doors. Doors 18 along the left and right lateral sides of the welding machine 10 provide access to an engine compartment. In certain embodiments, the doors 18 are hinged at their bottom edges, allowing the doors 18 to swing downward. The doors 18 can be easily removable from the hinges, so that they can be relocated away from the welding machine 10 when accessing the engine compartment. A door 20 on the top of the welding machine 10 also provides access to the engine compartment. The top door 20 can be aligned with an air filter housing for the engine, so that the air filter can be readily inspected and replaced.

One or more doors 22 on the front side of the welding machine 10 provide access to various electrical outputs of the welding machine. For example, auxiliary power receptacles and welding torch connections can be accessed via the doors 22 on the front of the welding machine 10.

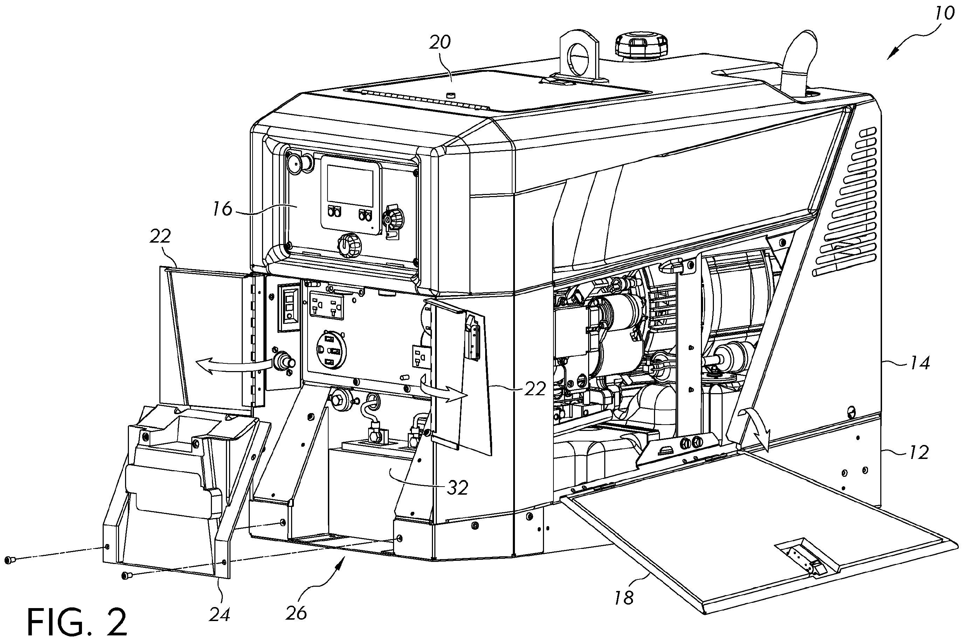

Beneath the doors 22 on the front side of the welding machine is a removable battery compartment cover 24. The battery compartment cover 24 is shown in an unattached, open position in Fig. 2 (e.g., unscrewed from the outer case 14). A starting battery 32 for starting the engine is stored in the battery compartment 26. The battery compartment 26 is located at the front of the welding machine 10. The starting battery 32 is readily accessible directly from the front of the welding machine 10 by removing the cover 24, allowing the battery to be serviced (e.g., charged) or replaced. In certain embodiments, the battery compartment cover 24 can be hinged to the base 12 or case 14 to form a hinged door.

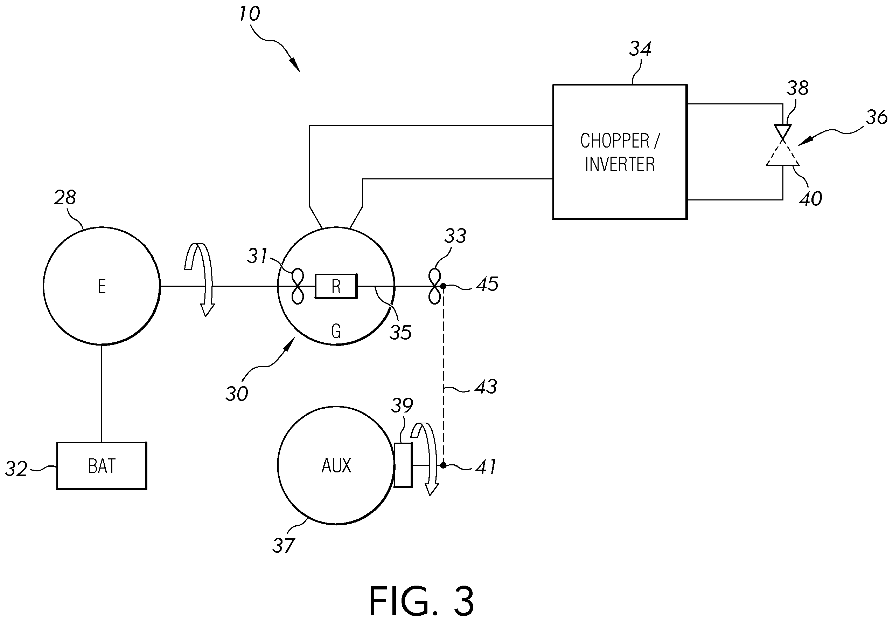

Figure 3 is a schematic block diagram of the welding machine 10. An internal combustion engine 28 is coupled to a generator 30 to drive the generator. The engine 28 and generator 30 can be mounted in-line and coaxially coupled so that they operate at the same rotational speed, or coupled via a speed-altering device, such as a pulley or gear system. The starting battery 32 is operatively connected to a starter motor of the engine 28 and is accessible from the front of the welding machine 10 as discussed above. The generator 30 is operatively connected to an arc generation power supply, such as a welding power supply 34, and supplies electrical energy to the welding power supply. The generator 30 can be an AC or DC generator, as desired. The welding power supply 34 converts the electrical energy from the generator 30 to a welding output for generating a welding arc 36 between a torch 38 and workpiece(s) 40 to be welded. The welding power supply 34 can include a chopper or inverter circuitry for generating the welding output, control circuitry for controlling the chopper or inverter circuitry, and may include a transformer and one or more rectifiers. The welding power supply 34 can further include heat sinks to help cool the welding power supply, such as by air pulled into the welding machine by a fan powered by the engine or generator. The specific construction of arc generation power supplies, such as welding power supplies, is well known to one of ordinary skill in the art and will not be discussed in detail herein.

As noted above, air that exits the generator 30 can be quite hot and can heat other components within the welding machine. For example, a generator with Class H winding insulation may have exit or discharge air temperatures of 110°C or higher. This hot exit air could flow over a fuel tank of the welding machine, or across another component of the welding machine that is negatively impacted by high heat. It is desirable to maintain the fuel temperature below a specific threshold, such as 50°C for example, and maintaining the fuel temperature becomes more difficult when the fuel tank is heated by the generator 30. Increasing the volume of airflow through the generator 30 will lower the exit air temperature from the generator. To create an increased airflow through the generator 30, the generator includes both a radial generator cooling fan 31 and an axial generator cooling fan 33. Both fans 31, 33 are mounted on or otherwise driven by the rotor shaft 35 of the generator 35. As the engine 28 turns the rotor shaft 35, both fans 31, 33 operate together to cool the generator 30. The axial generator cooling fan 33 is configured to push air axially through the generator housing, and the radial generator cooling fan 31 is configured to pull the air axially through the generator housing and expel the air radially from the housing. The radial generator cooling fan 31 can be located within the generator housing, and the axial generator cooling fan 33 can be located external to the housing to push air into the housing through an inlet. In certain embodiments, the axial generator cooling fan 33 can be used to cool additional components within the welding machine 10, such as the fuel tank. For example, operation of the axial generator cooling fan 33 can create a first cooling air flow that helps to cool the generator, and additional cooling air flows that cool the fuel tank, muffler, electronic components, etc.

The welding machine 10 can include an auxiliary load 37 that is mechanically driven by the engine 28. Examples of auxiliary loads 37 include air compressors and hydraulic pumps. The auxiliary load 37 can include a clutch 39, such as an electromagnetic clutch, to engage and disengage the auxiliary load. The auxiliary load 37 can further include a driven pulley 41, chain ring, gear, etc. that couples the auxiliary load to the output of the engine, such as via a drive belt 43, drive chain, etc. In certain embodiments, the auxiliary load 37 is driven by the engine 28 via a drive pulley 45 attached to the axial generator cooling fan 33. When the axial generator cooling fan 33 rotates with the clutch 39 on the auxiliary load 37 engaged, engine power is transferred to the auxiliary load via the drive belt 43, which couples the drive pulley 45 on the fan to the driven pulley 41 on the auxiliary load.

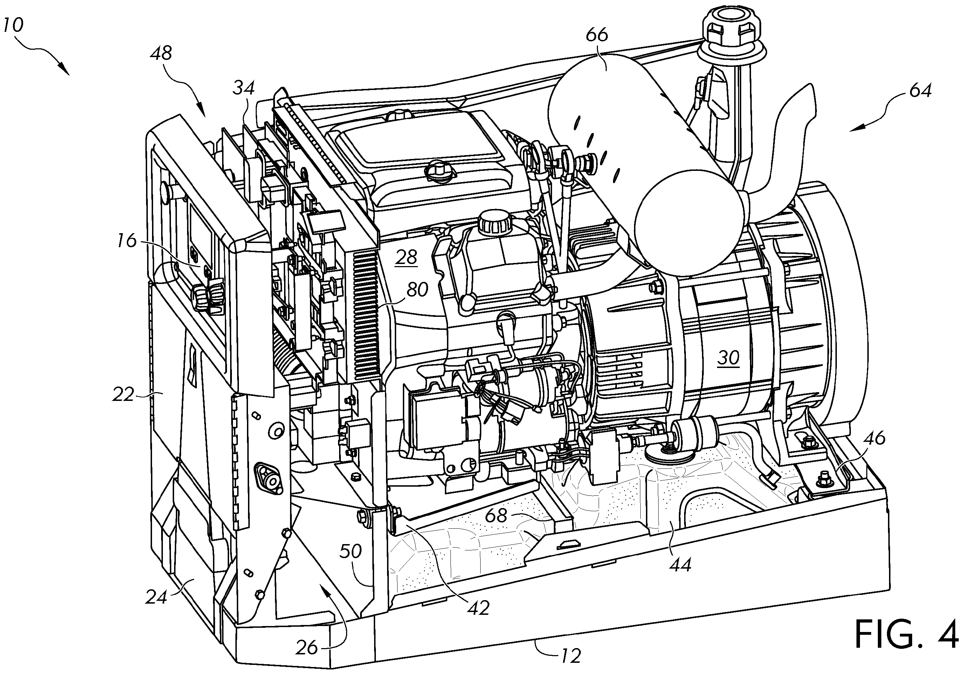

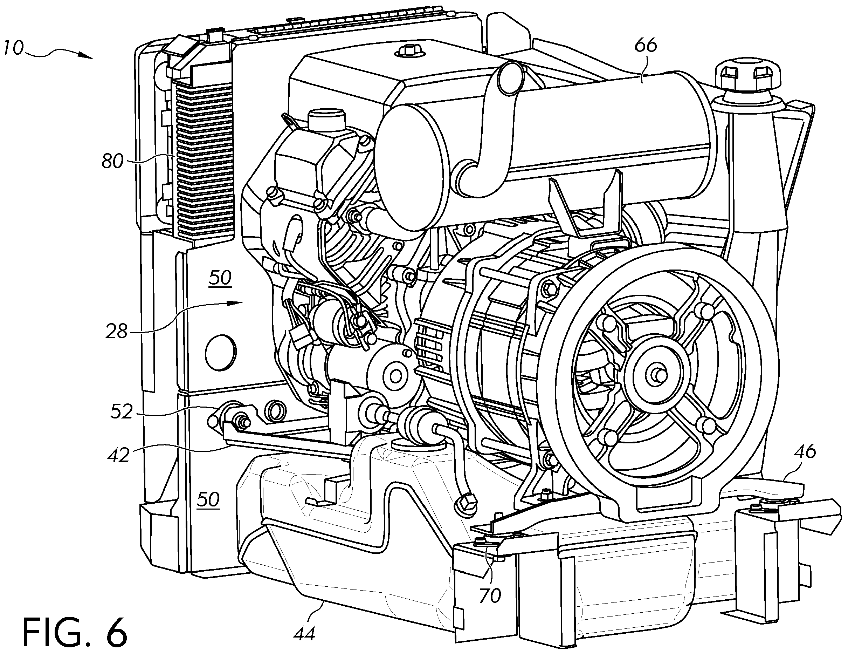

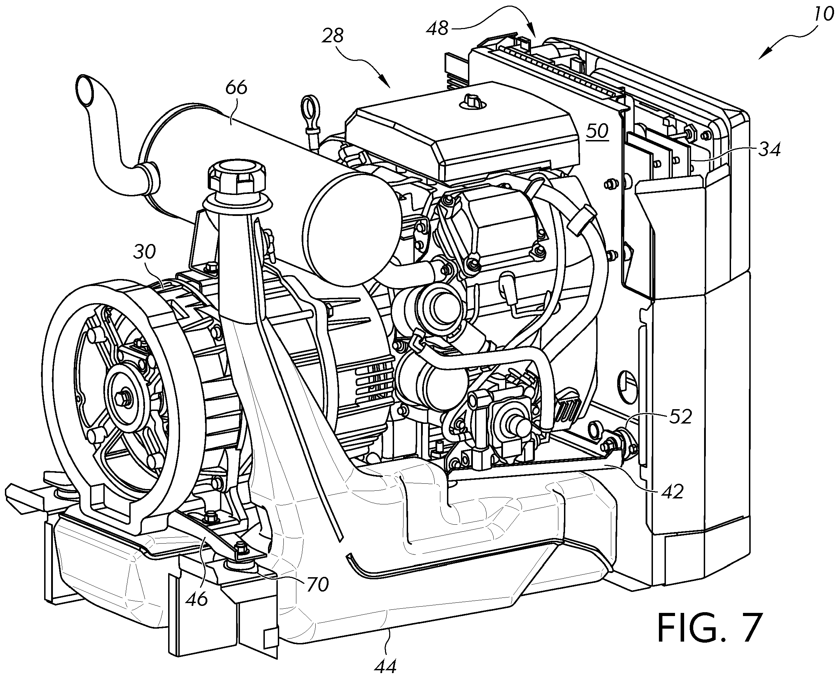

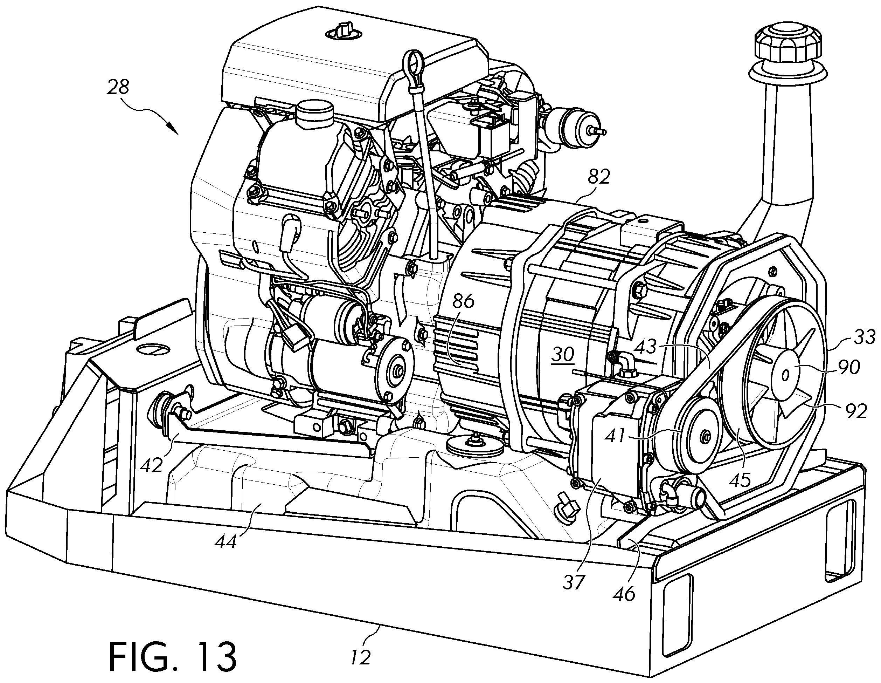

Figures 4-7 provide internal views of a welding machine 10 without the axial generator cooling fan and auxiliary load discussed above. The axial generator cooling fan and auxiliary load are illustrated in the internal view of Fig. 13.

The welding machine 10 includes an engine-mounting shelf 42 or bracket that is cantilevered from an internal wall or bulkhead of the machine's chassis structure. Cantilevering the engine-mounting shelf 42 removes the engine's mounting system from the bottom of the chassis structure and frees up space for maximizing the size of the fuel tank 44. The engine's mounting system does not intrude into usable fuel tank volume within the engine compartment. The fuel tank 44 is mounted within the chassis structure and extends from a point just behind the battery compartment 26 to the rear of the welding machine 10, and the fuel tank 44 is located beneath the engine 28, the engine-mounting shelf 42, the generator 30 and a mounting bracket 46 for the generator.

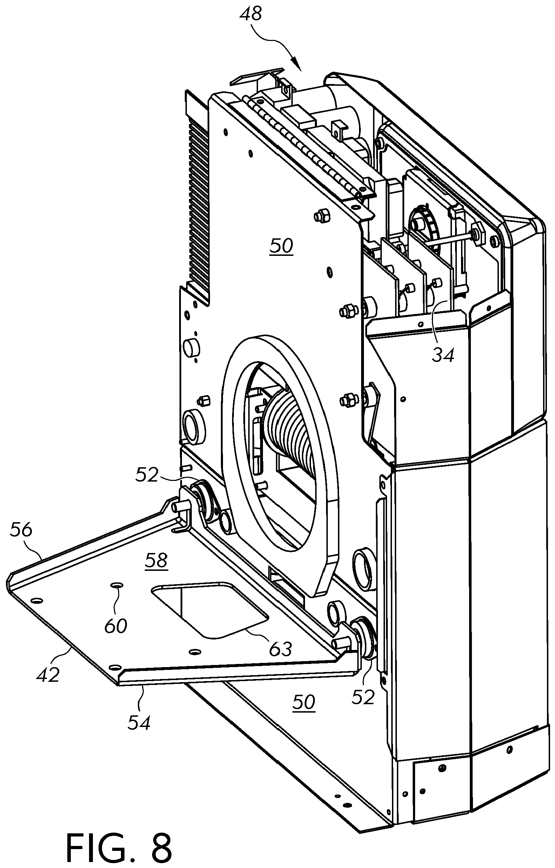

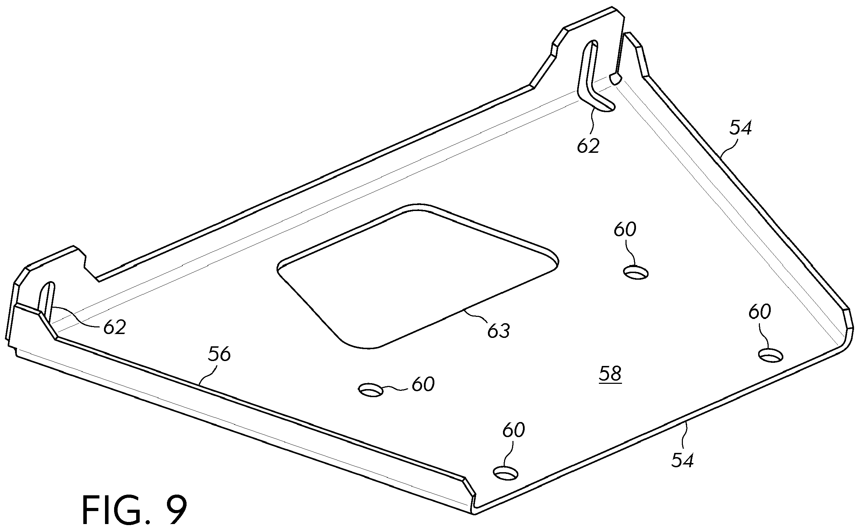

The engine-mounting structure is shown in detail in Fig. 8, and the engine-mounting shelf 42 is shown in Fig. 9. The engine compartment of the welding machine, containing the engine, fuel tank, muffler, and generator, is located at the rear of the welding machine, and is separated from the battery compartment 26, and separated from an electronics compartment 48 containing the welding power supply, by a divider wall 50 or bulkhead. Thus, the divider wall 50 is located between the internal combustion engine and the starting battery and welding power supply. The engine-mounting shelf 42 is cantilevered from the divider wall 50 and is mounted on vibration isolators 52 (e.g., elastomeric isolators). The engine-mounting shelf 42 projects horizontally rearward into the engine compartment from the divider wall 50, and the engine-mounting shelf is isolated from the divider wall and chassis structure by the vibration isolators 52. Conventional vibration isolators are typically axially loaded (i.e., the load is borne along the axis of the vibration isolator). However, in the shown embodiment, the vibration isolators 52 for the engine-mounting shelf 42 are radially loaded (i.e., the engine and engine-mounting shelf 42 apply a load to the vibration isolators in a radial direction of the vibration isolator, rather than along its axis). The engine-mounting shelf 42 shown in the drawings is supported by two vibration isolators 52. However, additional vibration isolators, such as three, four, or more than four, could be used as necessary or desired.

It can be seen that the engine-mounting shelf 42 in the illustrated embodiment has a trapezoidal shape. The engine-mounting shelf 42 need not have a trapezoidal shape and could have a square or rectangular shape for example. However, the trapezoidal shape provides the advantages of reduced torque/force on the vibration isolators 52 and the fasteners extending therethrough, while reducing the weight of the engine-mounting shelf 42. Locating the vibration isolators 52 far apart on the divider wall 50 helps to minimize the side-to-side rocking of the engine. The trapezoidal shape of the shelf 42 reduces the weight of the shelf by narrowing it near the engine mounts. It can be seen that the nonparallel sides 54, 56 of the engine-mounting shelf 42 extend away from the divider wall and converge, and would extend into the engine compartment of the welding machine. The edges of the nonparallel sides 54, 56 of the engine-mounting shelf 42 are upturned to form strengthening flanges that extend vertically away from the upper surface 58 of the shelf. Alternatively, the edges can extend downwards to form the strengthening flanges. In either case, the strengthening flanges stiffen the shelf 42 to support the weight of the engine. The engine is mounted to the upper surface 58 of the engine-mounting shelf 42. The engine-mounting shelf 42 can include holes 60 for fasteners to secure the engine to the shelf, and slots 62 for hanging the shelf from the vibration isolators 52. To reduce the weight of the engine-mounting shelf 42, or to allow air to flow through the shelf, the shelf can include one or more cutout portions 63.

Returning to Figs. 4-7, the welding power supply 34 is located in the electronics compartment 48, forward of the divider wall 50 and above the battery compartment 26. Behind the electronics and battery compartments, rearward of the divider wall 50, is the engine compartment 64, which occupies the majority of the interior volume of the welding machine 10. Among other things, the engine compartment 64 contains the engine 28, generator 30, muffler 66 and fuel tank 44. The engine 28 is mounted forward of the generator 30 on the engine-mounting shelf 42. The generator 30 can be mounted to a generator-mounting bracket 46 that is attached to the chassis structure at a rear portion of the welding machine 10. In an example embodiment, the generator-mounting bracket 46 is a bridge bracket that is attached to the chassis structure at the left and right sides of the chassis structure, near the rear corners of the chassis structure, and the generator is secured to the center portion of the "bridge" formed by the bridge bracket. Alternatively, the generator 30 could be mounted to another cantilevered shelf, similar to the engine 28. Vibration isolators 70 can be used to isolate the generator 30 and bridge bracket 46 from the chassis structure. The vibration isolators 70 for the generator 30 and bridge bracket 46 are axially loaded, unlike the vibration isolators 52 for the engine-mounting shelf.

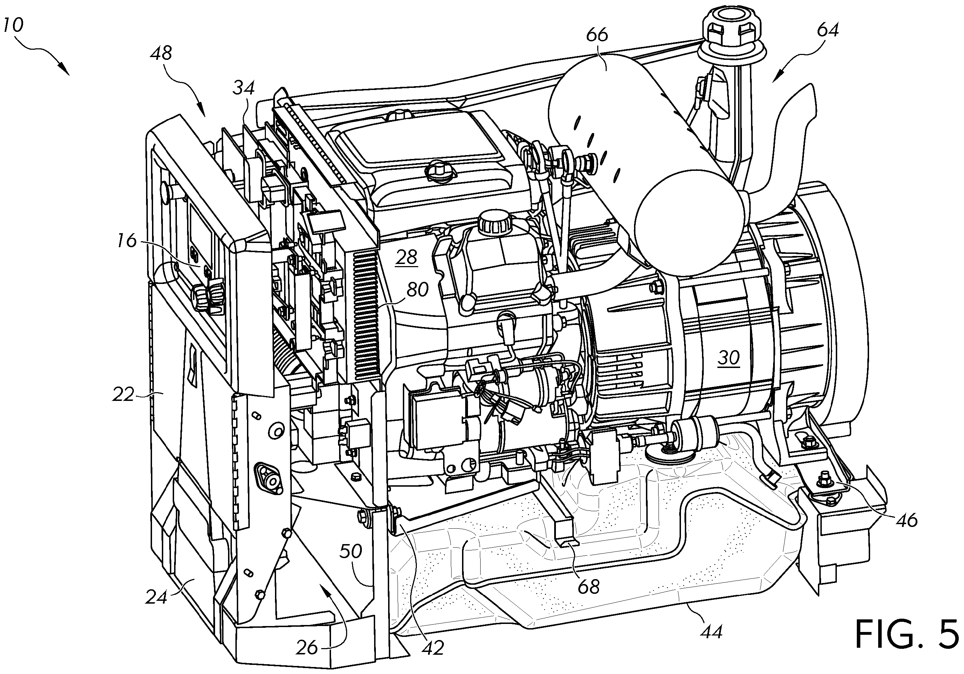

At the bottom of the chassis structure nestled within the base 12 is the fuel tank 44. The base is not shown in Figs. 5-7 to better expose the fuel tank 44. The base 12 can form a pan for holding the fuel tank 44 by having raised sides and having a generally planar bottom surface. In certain embodiments, the sides of the base 12 and/or its generally planar bottom surface can include locating protrusions that engage corresponding indentations in the fuel tank 44, to limit side-to-side and/or forward-to-backward movement of the fuel tank within the base. The welding machine 10 can also include a fuel tank strap 68 (Fig. 4) that is attached to the chassis structure and passes over the top of the fuel tank 44, to prevent upward movement of the fuel tank within the chassis. The fuel tank 44 can include an upwardly-projecting filler tube having a cap that is accessible from the exterior of the outer case 14 (Fig. 1) of the welding machine 10.

The fuel tank 44 can occupy nearly the entire floor space of the engine compartment 64 formed by the base 12. The fuel tank 44 can extend from the divider wall 50 to a point rearward of the generator-mounting bracket 46. The fuel tank 44 can occupy such a considerable amount of the floor space of the engine compartment 64 because the mounting system for the engine 28 does not intrude into the floor space. Thus, the fuel tank 44 can be located beneath each of the engine-mounting shelf 42, the engine 28, the generator 30, the generator-mounting bracket 46 and the muffler 66. The base 12 of the chassis structure has raised side walls, a raised rear wall, and a forward wall formed by the divider wall 50, and the fuel tank 44 can extend substantially to each of these four walls. Further, the engine 28 and generator 30 need not be supported by the fuel tank 44, but rather can be borne by their respective support structures (e.g., engine-mounting shelf 42 and bracket 46 and associated vibration isolators) and held just above the fuel tank.

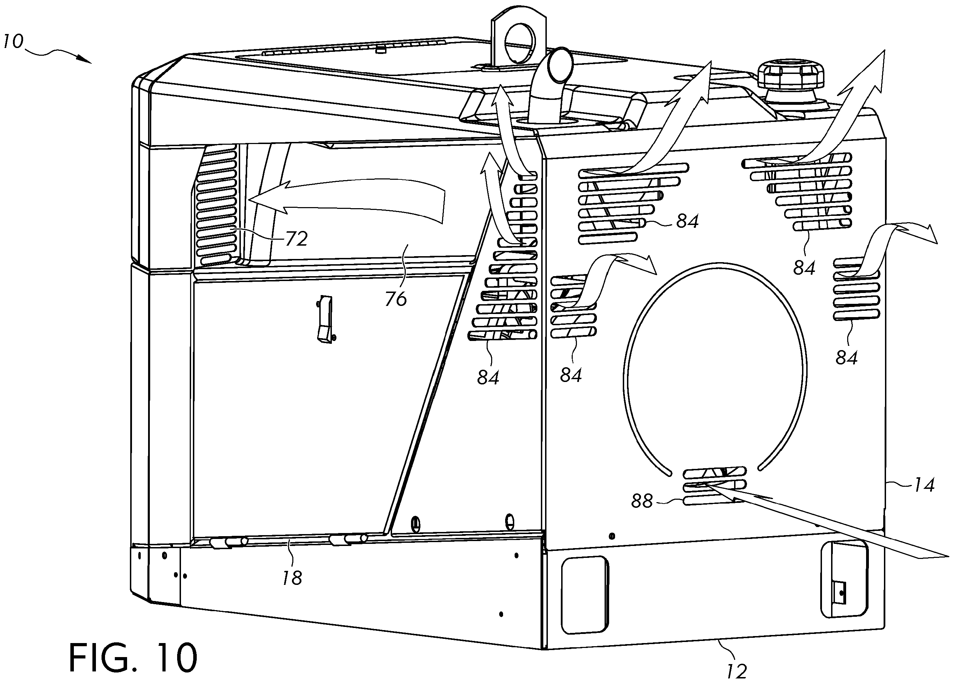

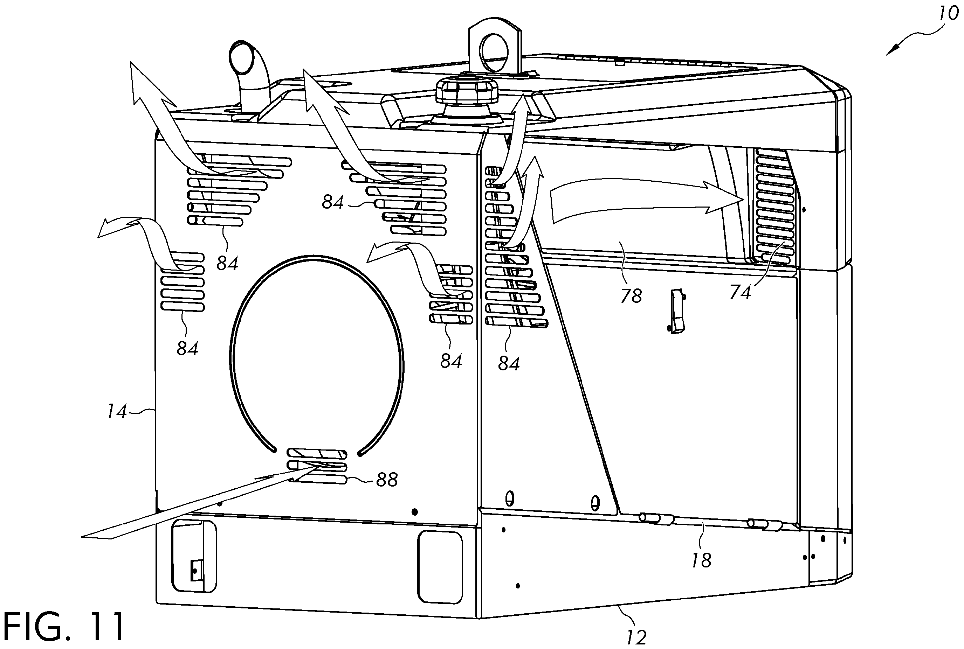

Figures 10 and 11 are rear perspective views of the welding machine 10. The welding machine 10 includes recessed side air intake vents 72, 74, which are recessed into the right and left lateral sides of the machine. The vents 72, 74 can be covered by slotted vent guards (grating, louvers, etc.) having a number of openings that allow air to enter the enclosure 14 while preventing finger access. The vents 72, 74 are located toward the front of the enclosure 14 and are open to and in fluid communication with the electronics compartment 48, to cool the electronics compartment and, in particular, to cool the welding power supply 34. The vents 72, 74 can be oriented generally parallel to the front and rear sides of the enclosure 14, or oriented at an acute angle with respect to the front and rear sides. In either orientation, cooling air is drawn through the vents 72, 74 in a generally forward direction (from back to front) into the electronics compartment 48.

The right and left lateral sides of the enclosure 14 include recessed air channels 76, 78 that extend rearward from the vents 72, 74 along the sides of the enclosure (e.g., along the engine compartment). The depth of the air channels 76, 78 can increase from back to front in a linear or non-linear fashion, so that the air channels are tapered. The recessed vents 72, 74 and air channels 76, 78 are less likely to be obstructed when the welding machine 10 is placed close to another object, as compared to vents located directly on a side surface of the machine. Moreover, the effective open area provided by the recessed vents 72, 74 can be made larger than conventional stamped louvered vents located on a side surface of the machine. Large intake vents 72, 74 provide a slower air flow, which reduces noise and the decreases the likelihood of drawing contaminants into the enclosure 14.

The recessed side vents 72, 74 and air channels 76, 78 are located well above the base 12, and can be located high on the machine, such as in the upper one-third or upper one-quarter of the machine's height, or lower, such as in the upper two-thirds or upper one-half of the machine's height. In the embodiment shown in the drawings, the recessed side vents 72, 74 and air channels 76, 78 are located above the engine compartment access doors 18 in an upper portion of the welding machine 10. The electronics compartment 48 is also located in an upper portion of the welding machine 10, above the battery compartment 26. Locating the side air intake vents 72, 74 and electronics compartment 48 in an upper portion of the welding machine 10 allows access to the starting battery 32 and battery compartment 26 to be provided at the front of the machine. Further, placing the vents 72, 74 above the base 12 reduces the likelihood that contaminants, such as dirt, rain, or snow, will be sucked into the welding machine 10. Engine noise emitted through the recessed side vents 72, 74 will tend to propagate away from the front of the welding machine 10 and away from an operator located at the front of the welding machine.

Cooling air flows into and out of the welding machine 10 as shown schematically by arrow in Figs. 10 and 11. The engine 28 can include an engine-cooling fan coupled to the engine to draw ambient air into the outer case 14 through the recessed side air intake vents 72, 74. In certain embodiments, one or both of the recessed vents 72, 74 are aligned with welding power supply heat sinks 80 located in the electronics compartment 48, to cool various components of the welding power supply 34. The heat sinks 80 can be located directly in front of the vents 72, 74 or at another location in an air flow path within the electronics compartment 48. The vents 72, 74 can be aligned with other components of the welding power supply 34, such as a rectifier for example.

Air is expelled from the engine compartment 64 through discharge vents 84 in the sides and/or rear of the outer case 14. The discharge vents 84 can also be located in the upper two-thirds or upper half of the outer case 14. Discharging the cooling air at the top of the welding machine 10 helps to project engine noise upwards and away from the operator.

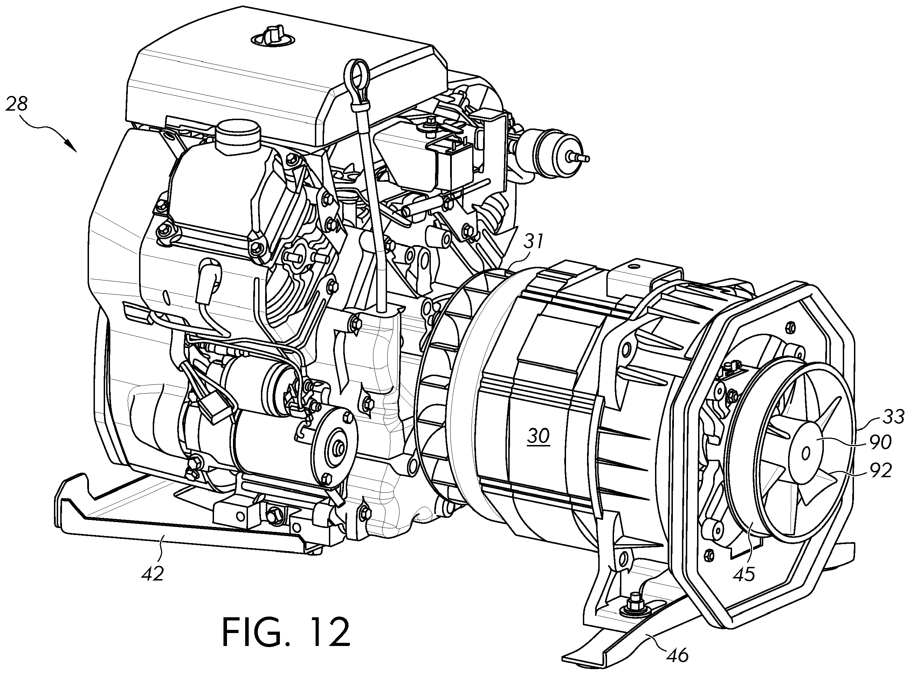

The rear surface of the outer case 14 includes an air intake vent 88 for the generator 30. Through the air intake vent 88, ambient air is pushed/pulled into the generator housing by the axial 33 and radial 31 (Fig. 12) generator cooling fans. The radial generator cooling fan 31 is located within the generator housing 82 (Fig. 13), and the axial generator cooling fan 33 is located external to the housing. A portion of the generator housing is removed in Fig. 12 to expose the radial generator cooling fan 31. Cooling air is pushed axially into the generator housing by the axial generator cooling fan 33, and pulled axially through the generator housing by the radial generator cooling fan 31. The air is expelled radially through vents 86 in the generator housing, which are shown in Fig. 13.

The axial generator cooling fan 33 has a central hub 90 that is mounted on or attached to the rotor shaft of the generator 30, at the rear of the generator. A plurality of fan blades 92 extend from the central hub 90. The axial generator cooling fan 33 further includes an annular pulley ring 45 for driving an auxiliary load 37, such as an air compressor or a hydraulic pump. The annular pulley ring 45 encircles the fan blades 92. In certain embodiments, the annular pulley ring 45 connects the fan blades 92 together, so that the fan blades extend from the central hub 90 to the annular pulley ring. The fan 33 may be formed as a monolithic component, with the central hub 90, blades 92, and annular pulley ring 45 being one piece.

The annular pulley ring 45 is a drive pulley for the auxiliary load 37. A drive belt 43 or similar device couples the annular pulley ring 45 to the driven pulley 41 on the auxiliary load 37. The clutch for engaging and disengaging the auxiliary load 37 can be built into auxiliary load, and is not shown in Fig. 13.

The auxiliary load 37 can be attached to the mounting bracket 46 for the generator 30, and the fuel tank 44 can extend beneath the auxiliary load. Locating the pulleys and drive belt at the rear of the machine and external to the generator housing improves serviceability. For example, the belt 43 can be replaced without removing the end cap of the generator 30.

In certain embodiments, some of the airflow created by the axial generator cooling fan 33 can be directed away from the generator 30 to cool other components in the engine compartment, such as the fuel tank 44 for example. After cooling such other components, the redirected airflow can combine with the cooling air that is discharged from the generator housing 82 and pass through the outer case of the welding machine.

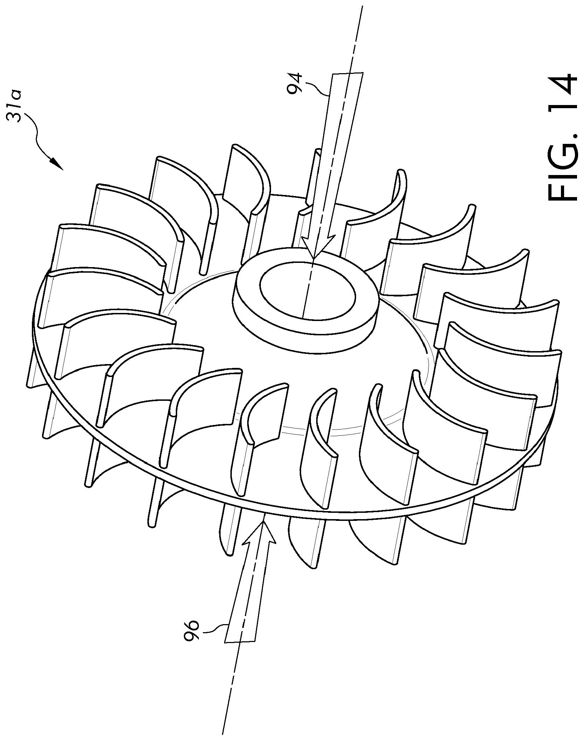

Figure 14 shows a further example of a radial generator cooling fan 31a having vanes on both sides of the impeller. The fan 31a can draw air axially into the generator housing from opposite axial directions 94, 96 and discharge it radially. The fan 31a can pull air through the generator housing as discussed above, and also pull air from the engine compartment in the opposite axial direction.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

**REFERENCE NUMBERS**

| | | | |
|---|---|---|---|
| 10 | welding machine | 52 | vibration isolator |
| 12 | base | 54 | side |
| 14 | outer case | 56 | side |
| 16 | user interface | 58 | upper surface |
| 18 | door | 60 | hole |
| 20 | door | 62 | slot |
| 22 | door | 63 | cutout portion |
| 24 | battery compartment cover | 64 | engine compartment |
| 26 | battery compartment | 66 | muffler |
| 28 | internal combustion engine | 68 | fuel tank strap |
| 30 | generator | 70 | vibration isolator |
| 31 | radial generator cooling fan | 72 | vent |
| 31a | fan | 74 | vent |
| 32 | battery | 76 | air channel |
| 33 | axial generator cooling fan | 78 | air channel |
| 34 | welding power supply | 80 | heat sink |
| 35 | rotor shaft | 82 | generator housing |
| 36 | welding art | 84 | discharge vent |
| 37 | auxiliary load | 88 | vent |
| 38 | torch | 90 | central hub |
| 39 | clutch | 92 | fan blade |
| 41 | pulley | 94 | axial direction |
| 42 | engine-mounting shelf | 96 | axial direction |
| 43 | belt | | |
| 44 | fuel tank | SMAW | shielded metal arc welding |
| 45 | pulley | GMAW | gas metal arc welding |
| 46 | generator-mounting bracket | FCAW | flux-cored arc welding |
| 48 | electronics compartment | GTAW | gas tungsten arc welding |
| 50 | divider wall | | |

## Claims

1. A welding machine (10), comprising:
a welding power supply (34);
a chassis structure at least partially forming an engine compartment (64);
an internal combustion engine (28) located within the engine compartment (64);
a generator (30) operatively connected to the welding power supply (34) to supply electrical energy to the welding power supply (34), wherein the generator (30) comprises a rotor shaft (35) driven by the internal combustion engine (28);
an air compressor or a hydraulic pump, comprising a driven pulley (41);
an axial generator cooling fan (33) driven by the rotor shaft (35) of the generator, wherein the axial generator cooling fan (33) comprises a plurality of fan blades (92) extending between a central hub (90) that is attached to the rotor shaft (35) and an annular pulley ring connecting the fan blades (92), wherein the annular pulley ring is coupled to the driven pulley (41) to power the air compressor or the hydraulic pump; and
a fuel tank (44) mounted within the chassis structure and located beneath both of the internal combustion engine (28) and the generator (30),
wherein the axial generator cooling fan (33) generates a first cooling air flow that cools the generator (30), and a second cooling air flow that cools the fuel tank (44).

2. The welding machine (10) of claim 1, further comprising a radial generator cooling fan (31) mounted on the rotor shaft (35) of the generator (30) and located within a generator housing (82), wherein preferably, the radial generator cooling fan (31) is configured to draw air axially into the generator housing (82) from opposite axial directions, and expel the air radially from the generator housing (82).

3. The welding machine (10) of claim 1 or 2, wherein the fuel tank (44) is further located beneath the air compressor or the hydraulic pump.

4. The welding machine (10) of any of the claims 1 to 3, wherein the generator (30) is coaxially coupled to the internal combustion engine (28).

5. A welding machine (10), comprising:
a welding power supply (34);
a chassis structure comprising a divider wall (50) that at least partially defines an engine compartment (64) of the welding machine (10);
a generator (30) operatively connected to the welding power supply (34) to supply electrical energy to the welding power supply (34), wherein the generator (30) comprises a rotor shaft (35);
an internal combustion engine (28) connected to drive the rotor shaft (35) of the generator (30);
an axial generator cooling fan (33) driven by the rotor shaft (35) of the generator (30), wherein the axial generator cooling fan (33) comprises a plurality of fan blades (92) extending between a central hub (90) attached to the rotor shaft (35) and an annular pulley ring connecting the fan blades (92);
an auxiliary load (37) comprising a driven pulley (41) coupled to the annular pulley ring of the axial generator cooling fan (33), wherein the axial generator cooling fan (33) powers the auxiliary load (37) via the annular pulley ring;
a cantilevered engine-mounting shelf (42) that is cantilevered from the divider wall (50), wherein the internal combustion engine (64) is attached to the cantilevered engine-mounting shelf (42); and
a fuel tank (44) mounted within the chassis structure and located beneath both of the cantilevered engine-mounting shelf (42) and the internal combustion engine (28).

6. The welding machine (10) of claim 5, wherein the fuel tank (44) is further located beneath the generator (30).

7. The welding machine (10) of claim 5 or 6, further comprising a vibration isolator (52) that isolates the cantilevered engine-mounting shelf (42) from the divider wall (50), wherein the internal combustion engine (28) and cantilevered engine-mounting shelf (42) apply a radial load to the vibration isolator (52).

8. The welding machine (10) of any of the claims 1 to 7, wherein the generator (30) comprises a generator housing (82), and the axial generator cooling fan (33) is located external to the generator housing (82).

9. The welding machine (10) of any of the claims 5 to 8, further comprising a radial generator cooling fan (31) mounted on the rotor shaft (35) of the generator (30) and located within a generator housing (82) wherein, preferably, the radial generator cooling fan (31) is configured to draw air axially into the generator housing (82) from opposite axial directions, and expel the air radially from the generator housing (82).

10. An electrical power generation apparatus, comprising:
an internal combustion engine (28);
an electric generator coaxially coupled to the internal combustion engine (28), wherein the electric generator comprises a rotor shaft (35) driven by the internal combustion engine (28);
an axial generator cooling fan (33) driven by the rotor shaft (35) of the electric generator, wherein the axial generator cooling fan (33) comprises a plurality of fan blades (92) extending from a central hub (90) that is attached to the rotor shaft (35), and an annular pulley ring encircling the fan blades (92);
an auxiliary load (37) comprising a driven pulley (41) coupled to the annular pulley ring of the axial generator cooling fan (33), wherein the axial generator cooling fan (33) powers the auxiliary load via the annular pulley ring;
a chassis structure comprising a bulkhead separating an engine compartment (64) from another compartment of the electrical power generation apparatus;
a vibration isolator (52) mounted to the bulkhead;
an engine-mounting shelf (42) cantilevered from the bulkhead and isolated from the bulkhead by the vibration isolator (52); and
a fuel tank (44) mounted within the chassis structure and located beneath each of the engine-mounting shelf (42), the internal combustion engine (28) and the electric generator.

11. The electrical power generator apparatus of claim 10, wherein the axial generator cooling fan (33) generates a first cooling air flow that cools the electric generator, and a second cooling air flow that cools the fuel tank (44).

12. The electrical power generator apparatus of claim 10 or 11, wherein the internal combustion engine (28) and engine-mounting shelf (42) apply a radial load to the vibration isolator (52).

13. The electrical power generation apparatus of any of the claims 10 to 12, wherein the electric generator comprises a generator housing (82), and the axial generator cooling fan (33) is located external to the generator housing (82).

14. The welding machine (10) or electrical power generation apparatus of any of the claims 10 to 13, further comprising a radial generator cooling fan (31) mounted on the rotor shaft (35) of the electric generator and located within a generator housing (82), wherein, preferably, the radial generator cooling fan (31) is configured to draw air axially into the generator housing (82) from opposite axial directions, and expel the air radially from the generator housing (82).

15. The welding machine (10) or electrical power generation apparatus of any of the claims 1 to 14, wherein the axial generator cooling fan (33) is configured to push air axially into the generator housing (82), and the radial generator cooling fan (31) is configured to pull the air axially through the generator housing (82) and expel the air radially from the generator housing (82).
